# EUROPEAN PATENT SPECIFICATION

(11) **EP 2 046 585 B1**
(45) Date of publication and mention of the grant of the patent: **29.08.2012**
(21) Application number: 07805723.9
(22) Date of filing: 19.07.2007
(51) Int. Cl.: B60B 17/00

(54) **FREIGHT RAILWAY WHEEL WITH HIGH BRAKING CAPACITY**
GÜTERWAGENRAD MIT HOHER BREMSKAPAZITÄT
ROUE POUR VÉHICULE FERROVIAIRE DE TRANSPORT DE MARCHANDISES AYANT UNE CAPACITÉ DE FREINAGE ÉLEVÉE

(30) Priority: 04.08.2006 IT BS20060172
(43) Date of publication of application: 15.04.2009
(73) Proprietor: Lucchini RS S.P.A., 24065 Lovere (BG) (IT)
(72) Inventor: LOMBARDO, Francesco, 24065 Lovere (BG) (IT); LUNDEN, Roger, 24065 Lovere (BG) (IT); NORDHALL, Lennart, 24065 Lovere (BG) (IT)
(74) Representative: Sangiacomo, Fulvia
(86) International application number: PCT/IT2007/000511
(87) International publication number: WO 2008/015712

(56) References cited:
- EP-A- 1 225 065
- WO-A-90/09290
- WO-A-03/064182
- DD-A3- 159 501
- US-A- 3 127 212
- "RP 16 Standardisierung eines klotzgebremsten Vollrades (Laufkreisduchmesser 920mm)" BESCHRAENKTE LISTE DER VON ERRI VEROEFFENTLICHEN BERICHTE, April 1996 (1996-04), pages 116-117,1, XP002968674
- "Drawing No. 2 Fwg 302.0.02.001.007 from the database of Deutsche Bundesbahn" DRAWING FROM THE DATABASE OF DEUTSCHE BUNDESBAHN, 2001, pages 1-2, XP002968675

## Description

### Field of the Invention

The present invention concerns the freight railway wheels, in particular tread braked wheels, including the wheels for which the tread braking is in addition to a main braking system. This invention proposes a wheel design with a high capacity of maintaining the induced stresses and deflections sufficiently low during and after braking operations. The wheels will be especially suitable for heavy axle load freight services, but also for special applications on passenger trains.

### State of the technique

The wheels of railway vehicles are manufactured even today mainly by forging or casting in a single piece, called mono-bloc or solid wheels, even if so-called tired wheels with separate circular rings (tyres) are used. In this case only mono-bloc wheels are taken into consideration. A modem passenger or freight car wheelset consists of two mono-bloc steel wheels rigidly mounted on a regular steel axle shaft.

The forged steel wheels are rolled to meet the required dimensions and often undergo mechanical finishing operations. A hard and wear resistant tread surface can be achieved by rim-quenching. This treatment induces beneficial circumferential compressive in the wheel rim which helps in suppressing the formation and propagation of transverse cracks. The wheel must be designed to resist mechanical loads due to its contact with the rail and, if the braking tread system is applied on the running surface, also to thermal loading caused by braking.

Braking on the tread is the most commonly used braking system for freight wagons. The braking action on the wheel is achieved by pressing at least one brake block against the tread or running surface of the wheel. A brake block can be made of cast iron or composite or sinter materials. When braking, the kinetic energy of the runing train is transformed into heat, which is partitioned between the wheel and the braking block or blocks.

During the tread braking action, a temperature gradient develops in the wheel with temperatures higher on the tread of the wheel. This gradient causes an increase in the circumferential compressive stresses close the tread surface of the wheel rim. Compressive stresses greater than the yield tress of the material can be reached, followed by a development of circumferential tensile stress in the wheel rim, near the running surface when the wheel cools down after a braking action. This residual stress often creates a safety problem in that it can cause propagation of radial cracks in the rim, web and hub of the wheel.

The developed temperature gradient is also followed by deflections of the wheel, in particular by an axial deflection of the wheel rim with respect to the hub. This axial deflection of the wheel modifies the wheelset gauge, that is the distance between the rims of the two wheels in a wheelset during a braking action and, should a plastic yielding occur, also when the wheels have cooled down.

An advantage of using block braking is that it roughens the running surface and therefore promotes adherence between the wheel and the rail, an important factor both for traction and braking. However, with block braking systems there are also some major drawbacks. Excessive heating can damage the wheel and become a limiting factor. The higher level of noise generated by trains equipped with block braked wheel compared with trains equipped with disk brakes become an important factor as regards to environmental disturbance. It has however been found that wheels braked by use of composite or sinter materials generate less noise than wheels where the braking block are of cast iron. An important aspect is that with the new materials for brake blocks, a higher percentage of heat generally enters the wheel than with the conventional cast iron block brakes, a fact that will influence the wheel dimensioning as regards to the thermal loading of the tread braking.

The recently introduced European standards U/C 510-5 *and EN* 13979-1 regulate the design of railway wheels both as regards to the mechanical loading deriving from wheel-rail contact and thermal loading resulting from tread braking. According to these standards, a freight car wheel shall fulfil the stress and deflection requirement resulting from braking thermal power depending on the axle load over a period of 45 minutes. The performance of the wheel shall be tested using a brake test bench.

In the designing of tread braked railway wheels, a compromise between stresses and deflections has often been attempted. Wheels with a straight web have good stability but very high stresses in the rim. Wheels with a conical shaped web have low stresses during and after braking, but suffer from very high lateral rim deflections.

To avoid these disadvantages, many different wheel designs with curvilinear webs have been attempted. However, several of these designs do not fulfil present performance requirements and, due to their geometric shape, cannot be fitted into existing bogies.

The so-called low stress wheels having an optimised, fractional factorial design belong to a special category of wheels. The FE calculations show that wheels with a C-shaped web (with a single radius) suffer from high deflections of the rim, that is a high tilting of the rim, this meaning the rotation of the cross section of the rim around a circumferential axis.

The steel materials for railway wheels are defined by *the EN* 13262:2004 (CEN) standard for forged wheels. The material shall have suitable properties with regards to tensile strength, hardness, toughness, ductility, fatigue strength and wear resistance. Furthermore the material shall be resistant against the development of brittle martensite due to local heating caused by wheels sliding followed by a rapid cooling.

Patent application EP-A-1 225 065 discloses a railway wheel according to the preamble of appended claim 1.

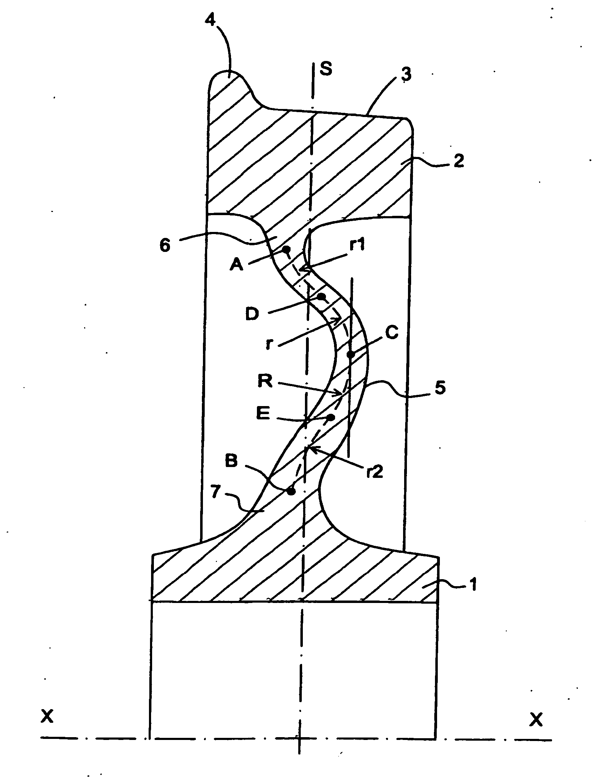

Similar railways wheels are described in the following prior art documents:
US-A-3 127 212,
WO 90/02290 A,
"RP 16 Standardisierung eines klotzgebremsten Vollrades (Laufkreisduchmesser 920 mm)" BESCHRAENKTE LISTE DER VON ERRI VEROEFFENTLICHEN BERICHTE, April 1996 (1996-04), pages 116-117, 1,
WO 03/0641282 A,
"Drawing No. 2 Fwg 302.0.02.001.007 from the database of Deutsche Bundesbahn", DRAWING FROM THE DATABASE OF DEUTSCHE BUNDESBAHN, 2001, pages 1-2 .

### Objective of the Invention

The objective of this invention is to provide a wheel that is easy to manufacture and which has sufficiently high radial flexibility and axial rigidity to avoid the abovementioned disadvantages regarding, respectively, stresses and deflections experienced in other wheel designs and wheels described in some patent documents.

The objective of the invention is achieved by the introduction of a new type of curved web between the wheel rim and hub, which allows an adjustment of the design to achieve a balance between the relative requirements on low stresses and on small lateral deflections and rim tilting.

In designing a railway wheel web it is therefore necessary to meet the requirements (1) regarding the fatigue stresses due to vertical and lateral mechanical loading, and (2) regarding the stresses and deflections of the rim due to thermal loading caused by tread braking. The requirement (1) will impose the need for the thickness of the web near the wheel hub to be relatively high, but in general will allow the web to be moderately thin near the rim. The shape and slope of this area of the web are decisive when they are able to allow radial expansion of the web which will result in a lowering of the rim stresses and lateral deflections according to the requirement (2). Furthermore, to reduce the rim tilting, the lateral position of the connection zone of the web with the wheel rim becomes important.

The invention has been conceived on the basis of such considerations resulting in achieving a railway wheel for railway vehicles, in particular for goods wagons, according to at least claim 1.

### Detailed Description of the Invention

The invention will however be described in greater detail in the continuation of the present description made in reference to the enclosed drawing, in which the only Figure shows a radial cross section of one part of a railway wheel.

As shown, the wheel comprises a hub 1, a rim 2 with a running surface or tread 3 and a flange 4 on its internal side, a web centre or intermediate disc 5 which connects to the hub and rim.

X-X Indicates the geometric and rotation axis of the wheel and S indicates a radial mid-plane of the wheel, perpendicular to the X-X axis.

The web 5 has a cross section which extends along a central line AB with a curvilinear shape between a point A in a region 6 connecting the web to the radially internal surface of the rim 2 and a point B in a region 7 connecting the web to the radially external surface of the hub 1.

More precisely, the web 5 has a curved intermediate portion, which extends between two inflection points D, E from opposite parts of an intermediate point C along a central line AB, and which has curvature centres (intrados) from one side of the wheel, as well as a first extreme portion between point D and the abovementioned point A in the junction region 6 with the rim and a second extreme portion between point E and the abovementioned point B in the junction region 7 with the hub, both with curvature centres (intrados) from the opposite side of the wheel.

Furthermore, according to the invention:
the two junction points A and B on the central line AB of the web 5 are positioned on the same side (in the drawing, the internal side) of the wheel compared to the radial mid-plane S;
the intermediate point C is on the opposite side (in the drawing, the external side) of point A and point B compared to the radial mid-plane S, and the tangent to the central line AB in said intermediate point C is parallel to said radial mid-plane S; and
the angle between the tangents to the central line AB of the web in the inflection points (D - E) is between 90 and 120 degrees.

The diameter of the internal radial surface of the rim 2 of the wheel is about 1.2 to 1.4 times the diameter at point C of the web, and the distance between point C and the radial mid-plane S is preferably in the range between 20 and 30 mm.

The radius r of the central line AB, in the intermediate portion of web 5 between point C and the inflection point D, is in the range of 29 to 50 mm, whereas radius R of the central line AB, in the intermediate portion of web 5 between point C and the inflection point E, is in the range of 90 to 200 mm. And still more, the radius r1 of the central line AB in the portion of web 5 between the inflection point D and the junction point A, is in the range of 22 to 60 mm, whereas radius r2 of the central line AB in the web portion 5 between the inflection point E and the junction point B, is in the range of 100 to 400 mm.

The thickness of the web near the rim 1 will be as thin as possible, consistent with the other dimensional parameters of the web itself.

## Claims

1. Railway wheel with an axisymmetric shape relative to a rotation axis (X-X) perpendicular to a radial mid-plane (S) of the wheel, comprising a hub (1), a rim (2) with a running surface (3) and a flange (4), a web centre or disc (5) between the rim and the hub, a junction region (6) of the web to the rim and a junction region (7) of the web to the hub, and where the cross section of said web centre (5) is constructed along a central curvilinear line (AB) extending between a point (A) located at the junction region (6) between the web (5) and the rim and a point (B) located at the junction region (7) between the web (5) and the hub (1), wherein
- the web centre (5) between the hub and the rim of the wheel has a curvilinear development with a curved intermediate portion, that extends between a first and second inflection points (D, E) located at opposite sides of an intermediate point (C) along the central line (S) and having curvature centres from one side of the wheel, as well as a first extreme portion between the first inflection point (D) and the point (A) in the junction region (6) with the rim and a second extreme portion between the second inflection point (E) and the point (B) in the junction region (7) with the hub, both with curvature centres on the opposite side to the wheel,
- the two points (A and B) at said junction regions (6, 7) are located in the same part of said radial mid-plane (S),
- the intermediate point (C) of the web has a tangent to the central line (AB) that is parallel to the mid-plane (S), and
- the angle between the tangents to the central line (AB) of the web at said inflection points (D - E) is between 90 and 120 degrees, **characterized in that** the intermediate point (C) of the web is located on a side of said radial mid-plane (S), which is opposite to said side on which the two points (A and B) at said junction regions (6, 7) are located.

2. Railway wheel according to claim 1, wherein the diameter of the internal side of the rim is between 1.2 and 1.4 times the diameter at the intermediate point (C) of the web.

3. Railway wheel according to claims 1 and 2, wherein the distance between the intermediate point (C) of the web and the mid-plane (S) is in the range of from 20 to 30 mm.

4. Railway wheel according to claims 1 to 3, wherein the radius of the central line (AB) in the portion between the intermediate point (C) of the web and the first inflection point (D) is in the range of between 29 and 50 mm.

5. Railway wheel according to the previous claims, wherein the radius of the central line (AB) in the portion between the intermediate point (C) of the web and the second inflection point (E) is in the range of between 90 and 200 mm.

6. Railway wheel according to the previous claims, wherein the radius of the central line (AB) in the portion between the first inflection point (D) and the junction point (A) is in the range of between 22 and 60 mm.

7. Railway wheel according to the previous claims, wherein the radius of the central line (AB) in the portion between the second inflection point (E) and the junction point (B) is in the range of between 100 and 400 mm.

8. Railway wheel according to the previous claims, wherein the web has a minimum thickness near the rim.

## Patentansprüche

1. Eisenbahnrad mit einer achsensymmetrischen Form in Bezug auf einer zu einer radialen Mittelebene (S) senkrechten Drehachse (X-X) des Rades, das eine Nabe (1), eine Felge (2) mit einer Lauffläche (3) und einen Flansch (4), eine Stegmitte oder Scheibe (5) zwischen der Felge und der Nabe, einen Verbindungsbereich (6) des Steges und der Felge und einen Verbindungsbereich (7) des Steges und der Nabe umfasst und wobei der Querschnitt der genannten Stegmitte (5) entlang einer zentralen gekrümmten Linie (AB), die sich zwischen einem Punkt (A) an dem Verbindungsbereich (6) zwischen dem Steg (5) und der Felge und einem Punkt (B) an dem Verbindungsbereich (7) zwischen dem Steg (5) und der Nabe (1) aufgebaut ist, wobei
die Stegmitte (5) zwischen der Nabe und der Felge des Rades einen gekrümmten Ablauf mit einem gekrümmten mittleren Abschnitt hat, der sich zwischen einem ersten und einem zweiten Wendepunkt (D, E) erstreckt, die sich auf gegenüberliegenden Seiten eines Zwischenpunktes (C) entlang der Mittellinie (S) befinden und mit Krümmungsmittelpunkte von einer Seite des Rades, sowie mit einem ersten äußersten Abschnitt zwischen dem ersten Wendepunkt (D) und dem Punkt (A) im Verbindungsbereich (6) mit der Felge und einem zweiten äußersten Abschnitt zwischen dem zweiten Wendepunkt (E) und dem Punkt (B) im Verbindungsbereich (7) mit der Nabe versehen ist, wobei diese beiden Krümmungsmittelpunkten haben die auf den gegenüberliegenden Seite des Rades liegen,
wobei die zwei Punkte (A und B) an den Verbindungsbereichen (6, 7) auf derselben Seite des Rades in Bezug auf der genannten radialen Mittelebene (S) liegen,
wobei der Zwischenpunkt (C) des Steges eine Tangente zur zentralen Linie (AB) hat, die parallel zur Mittelebene (S) ist,
wobei der Winkel zwischen den Tangenten zur zentralen Linie (AB) des Steges an den genannten Wendepunkten (D - E) zwischen 90 und 120 Grad ist
**dadurch gekennzeichnet dass** der Zwischenpunkt (C) des Steges auf einer Seite der genannten radialen Mittelebene (S) liegt, die zu der genannten Seite auf der die zwei Punkte (A und B) an den genannten Verbindungsbereichen (6, 7) liegen, entgegengesetzt ist.

2. Eisenbahnrad nach Anspruch 1, wobei der Durchmesser der inneren Seite der Felge zwischen 1,2- und 1,4-mal grösser als der Durchmesser am Zwischenpunkt (C) des Steges ist.

3. Eisenbahnrad nach den Ansprüchen 1 und 2, wobei der Abstand zwischen dem Zwischenpunkt (C) des Steges und der Mittelebene (S) im Bereich von 20 bis 30 mm liegt.

4. Eisenbahnrad nach einem der Ansprüche 1 bis 3, wobei der Radius der zentralen Linie (AB) in dem Abschnitt zwischen dem Zwischenpunkt (C) des Steges und dem ersten Wendepunkt (D) im Bereich zwischen 29 und 50 mm liegt.

5. Eisenbahnrad nach den vorhergehenden Ansprüchen, wobei der Radius der zentralen Linie (AB) in dem Abschnitt zwischen dem Zwischenpunkt (C) des Steges und dem zweiten Wendepunkt (E) im Bereich zwischen 90 und 200 mm liegt.

6. Eisenbahnrad nach den vorhergehenden Ansprüchen, wobei der Radius der zentralen Linie (AB) in dem Abschnitt zwischen dem ersten Wendepunkt (D) und dem Verbindungspunkt (A) im Bereich zwischen 22 und 60 mm liegt.

7. Eisenbahnrad nach den vorhergehenden Ansprüchen, wobei der Radius der zentralen Linie (AB) in dem Abschnitt zwischen dem zweiten Wendepunkt (E) und dem Verbindungspunkt (B) im Bereich zwischen 100 und 400 mm liegt.

8. Eisenbahnrad nach den vorhergehenden Ansprüchen, wobei der Steg eine minimale Dicke in der Nähe der Felge hat.

## Revendications

1. Roue ferroviaire avec une forme axisymétrique par rapport à un axe de rotation (X-X) perpendiculaire à un plan médian radial (S) de la roue, comprenant un moyeu (1), une bandage (2) avec une surface de roulement (3) et une boudin (4), un centre de tige ou disque (5) entre le bandage et le moyeu, une région de jonction (6) de la tige avec le bandage et une région de jonction (7) de la tige avec le moyeu, et dans laquelle la section transversale dudit centre de tige (5) est construite le long d'une ligne curviligne centrale (AB) s'étendant entre un point (A) qui se trouve en correspondance de la région de jonction (6) entre la tige (5) et le bandage et un point (B) qui se trouve en correspondance de la région de jonction (7) entre la tige (5) et le moyeu (1), dans laquelle
- le centre de tige (5) entre le moyeu et le bandage de la roue se développe de manière curviligne avec une portion intermédiaire courbe, qui s'étend entre un premier et un second point de fléchissement (D, E) qui se trouvent sur côtés opposées d'un point intermédiaire (C) le long de la ligne centrale (S) et ayant des centres de courbure a partir d'un côté de la roue, ainsi que une première portion d'extrémité entre le premier point de fléchissement (D) et le point (A) dans la région de jonction (6) avec le bandage et une deuxième portion d'extrémité entre le deuxième point de fléchissement (E) et le point (B) dans la région de jonction (7) avec le moyeu, tous les deux ayant des centres de courbure sur le côté opposé à la roue,
- les deux points (A e B) en correspondance desdites régions de jonction (6, 7) se trouvent sur le même côté de la roue par rapport audit plan médian radial (S),
- le point intermédiaire (C) de la tige a une tangente par rapport à la ligne centrale (AB) parallèle au plan médian (S), et
- l'angle entre les tangentes par rapport à la ligne centrale (AB) de la tige en correspondance desdits points de fléchissement (D-E) est compris entre 90 et 120 dégrées,
**caractérisée en ce que** le point intermédiaire (C) de la tige se trouve sur un côté dudit plan médian radial (S), opposé audit côté sur lequel les deux points (A e B) en correspondance desdites régions de jonction (6, 7) se trouvent.

2. Roue ferroviaire selon la revendication 1, dans laquelle le diamètre du côté intérieur du bandage est entre 1,2 et 1,4 fois le diamètre en correspondance du point intermédiaire (C) de la tige.

3. Roue ferroviaire selon les revendications 1 et 2, dans laquelle la distance entre le point intermédiaire (C) de la tige et le plan médian (S) est comprise entre 20 et 30 mm.

4. Roue ferroviaire selon les revendications 1 à 3, dans laquelle le rayon de la ligne centrale (AB) dans la portion entre le point intermédiaire (C) de la tige et le premier point de fléchissement (D) est compris entre 29 et 50 mm.

5. Roue ferroviaire selon les revendications précédentes, dans laquelle le rayon de la ligne centrale (AB) dans la portion entre le point intermédiaire (C) de la tige et le deuxième point de fléchissement (D) est compris entre 90 et 200 mm.

6. Roue ferroviaire selon les revendications précédentes, dans laquelle le rayon de la ligne centrale (AB) dans la portion entre le premier point de fléchissement (C) et le point de jonction (D) est compris entre 22 et 60 mm.

7. Roue ferroviaire selon les revendications précédentes, dans laquelle le rayon de la ligne centrale (AB) dans la portion entre le second point de fléchissement (C) et le point de jonction (D) est compris entre 100 et 400 mm.

8. Roue ferroviaire selon les revendications précédentes, dans laquelle la tige a une épaisseur minime en proximité du bandage.
